(19) Europäisches Patentamt

European Patent Office

Office européen des brevets

(11) Veröffentlichungsnummer: **0 031 545**
**A1**

(12) # EUROPÄISCHE PATENTANMELDUNG

(21) Anmeldenummer: 80107961.7

(22) Anmeldetag: 17.12.80

(51) Int. Cl.³: **B 29 F 1/10**

(30) Priorität: 22.12.79 DE 2952223
09.12.80 DE 3046332

(43) Veröffentlichungstag der Anmeldung: 08.07.81
Patentblatt 81/27

(84) Benannte Vertragsstaaten: **AT FR IT**

(71) Anmelder: **Danner, Hans, Burgherrnstrasse 33,
D-7000 Stuttgart 30 (DE)**

(72) Erfinder: **Schleicher, Ernst H., Am Scheilberg 27,
D-6232 Neuenhain/Taunus (DE)**

(74) Vertreter: **LOUIS, PÖHLAU, LOHRENTZ & SEGETH,
Kesslerplatz 1, D-8500 Nürnberg (DE)**

(54) Verfahren und Vorrichtung zur Herstellung eines Schuhes.

㊗ Die Erfindung betrifft ein Verfahren und eine Vorrichtung zur Herstellung eines Schuhes mit einem Sohlenkörper (4), dessen Umfangsfläche von einem Bezugsstreifen (10) abgedeckt ist, wobei der Sohlenkörper sowohl an das Schuhoberteil als auch an den Bezugsstreifen angegossen ist und der obere Rand des Bezugsstreifens oberhalb des oberen Randes der Umfangsfläche des Sohlenkörpers verläuft. Um hierbei eine gute Abdichtung zwischen dem Rahmen (1) und dem aufgeleisteten Schuhoberteil (3, 5) zu erreichen, wird vorgeschlagen, dass in die Giessform ein an seinem oberen Rand mit einem nach innen auskragenden und in der entgegengesetzten Richtung nachgiebigen, elastisch verformbaren Dichtungswulst versehener Bezugsstreifen auf der seitlichen Innenfläche der Giessform angeordnet und hiernach die Form vermittels des aufgeleisteten Schuhoberteils so verschlossen wird, dass der Schaft des Schuhoberteils und die gegebenenfalls vom Schaft unbedeckt gebliebene Leistenfläche bzw. -flächen gegen den Dichtungswulst des Bezugsstreifens dichtend angepresst werden und dass anschliessend der Sohlenkörper angegossen wird.

- 1 -

## Verfahren und Vorrichtung zur Herstellung eines Schuhes

Die Erfindung betrifft ein Verfahren zur Herstellung eines Schuhes mit einem Sohlenkörper, dessen Umfangsfläche von einem Bezugsstreifen abgedeckt ist, wobei der Sohlenkörper sowohl an das Schuhoberteil als auch an den Bezugsstreifen angegossen ist und der obere Rand des Bezugsstreifens oberhalb des oberen Randes der Umfangsfläche des Sohlenkörpers verläuft. Ein solches Verfahren ist aus der DE-OS 18 04 560 bekannt. Ferner bezieht sich die Erfindung auf eine Vorrichtung, nämlich eine Spritzform, zur Durchführung des angegebenen Verfahrens.

Bei der Herstellung von Schuhwerk mit angegossenem Sohlenkörper ist die Abdichtung zwischen dem Rahmen des Spritzwerkzeuges und dem den Gießraum nach oben abschließenden aufgeleisteten Schaft problematisch, vor allem dann, wenn der Schaft zum Schuhboden hin umfänglich nicht vollständig geschlossen ausgebildet ist, wie dies beispielsweise für eine Sandalette zutrifft. Mit dem Vorschlag nach der vorgenannten DE-OS soll das Dichtungsproblem dadurch gelöst werden, daß der Bezugsstreifen durch Andrücken seines oberen Randes an den während des Angießens bzw. Anspritzens des Sohlenkörpers aufgeleisteten Schaft bzw. gegen den freiliegenden Rand der Brandsohle eine Abdichtungsfunktion gegenüber dem die Sohlengieß- bzw. -spritzmasse aufnehmenden Raum der Form übernimmt. Es hat sich jedoch gezeigt, daß alleine hierdurch eine ausreichende Abdichtung nicht zustande kommt. Deshalb wird auch in der DE-OS als zusätzliche Maßnahme für die Abdichtung des Sohlengießraums vorgeschlagen, am Rahmen der Form und an dem den Schaft tragenden Leisten genau aufeinander abgestimmte Abschrägungen vorzusehen, die beim Schließen der Form gegeneinander andrückbar sind. Wegen der umfänglichen Schaftunterbrechungen in Sohlennähe kann die hiermit erstrebte vollständige Abdichtung aber nur dann zustande kommen, wenn die Abschrägung des Leistens in den Bereichen, in welchen die Schaftteile am Leisten anliegen, Ausnehmungen aufweist, welche der Stärke und Breite des Schaftes bzw. der Schaftteile genau entsprechen und diese so aufnehmen, daß beim Andrücken der Abschrägungen von Rahmen und Leisten ringsum eine gute Abdichtung erreicht wird. Der hiermit verbundene Kostenaufwand ist beträchtlich, weil für jedes Schuh(schaft)modell ein diesem angepaßter Formenleisten bereitgehalten werden muß. Dabei fällt der häufige Modellwechsel in der Schuhbranche ganz besonders ins Gewicht.

Diese Situation erklärt, weshalb sich bisher für die Herstellung von Schuhwerk mit unterbrochenem Schaft, insbesondere Sandaletten, das Anspritzen von Sohlenkörpern an das Schuhoberteil noch nicht durchsetzen konnte. Dies gilt auch im Hinblick auf die DE-PS 14 85 774. Dort ist ein Verfahren zur Herstellung eines Schuhes mit an das Schuhoberteil angegossenem Sohlenkörper beschrieben, wobei in Sohlennähe
am Schaft durch Faltung ein Wulst ausgebildet wird,
der die Dichtung zwischen dem Rahmen der Sohlenform
und dem aufgeleisteten Schaft übernehmen soll. Ein
solches Verfahren ist aus verschiedenen Gründen in
der Praxis nicht durchführbar. Dies vor allem deshalb, weil trotz des Schärfens des Schaftobermaterials die für die Faltbarkeit des Schaftes erforderliche Flexibilität nicht erreichbar ist. Von der in
der genannten DE-PS vorgeschlagenen Schärfbehandlung
werden weder das Schaftfutter noch die Schuhkappen
erfaßt, so daß sich an deren versteifender Wirkung
nichts ändert. Entsprechendes gilt für die Bereiche,
in denen sich die Materialzuschnitte, aus denen ein
Schaft üblicherweise zusammengesetzt ist, überlappen. Bei allem ist noch zu berücksichtigen, daß durch
das Schärfen das Schaftleder ganz erheblich geschwächt
wird.

Hinzu kommt, daß sich der am Schaft ausgebildete Wulst
innerhalb der bei einer rationellen Schuhfertigung einzuhaltenden kurzen Zeitspannen auf dem der Spritzform
zugeordneten Leisten nicht in einer solchen Weise positionieren läßt, daß der Wulst umlaufend exakt in
einer Ebene zu liegen kommt, die der verlangten Anlage
des Wulstes unmittelbar unterhalb des oberen Rahmenrandes beim Einsetzen des aufgeleisteten Schaftes in
die obere Öffnung des Formenrahmens entspricht. In der
DE-PS ist zwar angegeben, den unteren Schaftrand zeitweilig durch Drahtklammern oder durch Schnüre in der
gewünschten Lage zu halten bis der Seitenrahmen der
Schlenform am Wulst anliegt. Abgesehen davon, daß auch

- 4 -

dies alles sehr zeitaufwendig ist und sich innerhalb der erwähnten kurzen Arbeitstakte der Sohlengießmaschine nicht bewerkstelligen läßt, können entgegen der Angabe in der Entgegenhaltung nach dem Einsetzen des aufgeleisteten Schaftes in den Formenrahmen die Drahtklammern nicht mehr entfernt oder die
Schnüre geschnitten werden, nachdem ja der Formenhohlraum nach dem Schließen der Form vermittels des
aufgeleisteten Schaftes nicht mehr zugänglich ist.

Der Erfindung liegt die Aufgabe zugrunde, ein Verfahren zur Herstellung von Schuhwerk mit einem angegossenen Sohlenkörper und einem vorzugsweise ringsum
nicht geschlossenen Schuhoberteil vorzuschlagen, bei
dem sich eine wirksame Abdichtung des Gießraumes der
Form nach oben, also zwischen Formenrahmen und aufgeleistetem Schuhoberteil, mit einem formfremden Teil
so bewerkstelligen läßt, daß eine solche Maßnahme in
die bekannte Massenfertigung von Schuhwerk, so z.B.
auf einem in kurzen Zeittakten bewegten und einem Einspritzaggregat zugeordneten Formdrehtisch, ohne Produktivitätseinbuße eingefügt werden kann. Durch die
Verwendung eines formfremden Abdichtungsmittels sollen die Kosten eingespart werden, die sich bei dem
aus der DE-OS 18 04 560 bekannten Verfahren durch den
erhöhten Formenaufwand ergeben. Eine Teilaufgabe der
Erfindung ist darin zu sehen, eine zur Durchführung
des erfindungsgemäßen Verfahrens besonders zweckmäßige Sohlenspritzform zur Verfügung zu stellen.

Zur Lösung der vorgenannten Aufgabe wird vorgeschlagen, daß in eine für das Angiessen des Sohlenkörpers
verwendete Gießform ein an seinem oberen Rand mit
einem nach innen auskragenden und in der entgegengesetzten Richtung nachgiebigen, elastisch verformbaren Dichtungswulst versehener Bezugsstreifen auf der seitlichen Innenfläche der Form angeordnet und hiernach die oberseitige Öffnung der Form vermittels des auf einen Leisten aufgezogenen Schuhoberteils in solcher Weise verschlossen wird, daß der Schaft des Schuhoberteils und die gegebenenfalls vom Schaft unbedeckt gebliebene Leistenfläche bzw. -flächen gegen den Dichtungswulst des Bezugsstreifens dichtend angepreßt werden und daß anschließend der Sohlenkörper angegossen wird.

Durch die nachgiebig-elastische Ausbildung des am oberen Rand des Bezugsstreifens vorgesehenen Dichtungswulstes können entlang der Dichtungslinie zwischen Rahmen und aufgeleistetem Schaft vorhandene Unregelmäßigkeiten, wie sie insbesondere bei Sandaletten wegen der Schaftunterbrechung vorliegen, dichtend überbrückt werden. Der Dichtungswulst kann auf die Dimension des Bezugsstreifens und die Ausbildung des Schaftes (einschließlich Schaftmaterial) genau abgestimmt werden, womit die Erfindung hinsichtlich der verschiedenen Schuhtypen einen großen Anwendungsbereich erhält und zwar nicht nur bei offenem, sondern auch ringsum geschlossenem Schuhwerk.

Bei Schuhen mit in Sohlennähe umfänglich unterbrochenem Schaft soll der Dichtungswulst in Richtung auf den Schaft eine solche Stärke besitzen, daß er bei aufgeleistetem Schaft die umfänglichen Zwischenräume zwischen den Schaftteilen dichtend ausfüllt und in vom Schaft abgewendeter Richtung mindestens in einem der Stärke des Schaftmaterials entsprechendem Ausmaß komprimierbar sein. Da die Sohlengießmasse bis an die Unterseite des Dichtungswulstes heranreicht wird eine feste Verbindung zwischen dem     mit seinem Dichtungswulst am Schaftmaterial nur anliegenden, mit diesem also nicht fest verbundenen Bezugsstreifen und dem angegossenen Sohlenkörper erreicht.

Selbstverständlich kann die Erfindung auch bei Schuhwerk Anwendung finden, dessen Bodenkörper zu einem Absatz ausgeformt ist. In diesem Falle besitzt der Bezugsstreifen in der Absatzpartie eine entsprechend größere Breite als im übrigen Bereich. Der Bezugsstreifen reicht soweit am Schaft herauf, daß der Rand der Brandsohle an den schaftfreien Stellen am fertigen Schuhwerk noch mit abgedeckt ist.

Da, wie nachfolgend bei der Beschreibung des für die Durchführung des erfindungsgemäßen Verfahrens verwendeten Formwerkzeugs noch erkennbar werden wird, der aufgeleistete Schaft wegen Fortfalls der (abgeschrägten) Dichtungsflächen am Rahmen und an dem den Schaft tragenden Leisten tiefer in die Form abgesenkt werden kann als dies nach dem Vorschlag der vorgenannten DE-OS möglich war, ergibt sich der weitere Vorteil, daß Leisten und Schaft nicht mehr so weit über den Sohlenrand auszukragen brauchen wie in dem bekannten Fall, was zu einem ausgeglicheneren Verhältnis zwischen Schuhoberteil und Schuhboden führt.

Der bei dem erfindungsgemäßen Verfahren verwendete Bezugsstreifen kann in vielfältiger Weise so ausgebildet sein, daß er auch als ein modisches Attribut
zur Geltung kommt. Dies gilt auch für die Gestaltung
des Dichtungswulstes, für den in der Zeichnung einige
Ausführungsformen dargestellt sind, die nachfolgend
noch näher beschrieben werden. Als Material für den
Bezugsstreifen kommen beispielsweise Leder, Kunstleder, Kunststoff, Gummi, Textil und Kork in Betracht.
Durch Nähte, Paspol, Einfass usw. ergeben sich weitere Möglichkeiten für eine modische Ausgestaltung.
In diesem Zusammenhang kommt auch der Ausbildung des
gegossenen Sohlenkörpers im Bereich des unteren Randes des Bezugsstreifens Bedeutung zu.

Bei einer vorzugsweisen Ausführungsform der Erfindung wird in die Gießform ein den Bezugsstreifen vor
dem Einbringen der Gießmasse nach innen abstützendes,
vorzugsweise aus Kunststoff bestehendes Formteil angeordnet. Hierdurch wird die Positionierung des den
Dichtungswulst aufweisenden Bezugsstreifens in der
Gießform erleichtert und damit eine schnellere Durchführung des gesamten Verfahrens ermöglicht.

Dabei kann das zur Abstützung des Bezugsstreifens
vor dem Angießen des Sohlenkörpers verwendete Formteil so gestaltet sein, daß es den Bezugsstreifen
nur bereichsweise abstützt. Dies wäre beispielsweise
der Fall, wenn sich von einem Mittelstück fingerartige Ansätze in Richtung auf die Wandung der Gießform erstrecken und den an dieser anliegenden Bezugsstreifen abstützen bzw. gegen die Wandung andrücken würden. Die Länge der Finger müßte auf die
Kontur der Formenwandung abgestimmt sein. Vorzugs-

- 8 -

sieht jedoch die Erfindung eine vollflächige Abstützung des Bezugsstreifens durch das Formteil vor.

Die zuletzt beschriebene Ausführungsform der Erfindung läßt sich zweckmäßig in der Weise verwirklichen, daß in der Gießform ein Formteil angeordnet wird, das bereits vorher, also in einer gesonderten Arbeitsstufe, an die Innenseite des Bezugsstreifens angegossen wurde. Dabei kann das Formteil wannenförmig ausgebildet sein und der obere Rand der Wannenwandung von dem Dichtungswulst abgedeckt werden. Da der Bezugsstreifen durch die Abstützung vermittels des erfindungsgemäß verwendeten Formteils einen festen Stand erhalten hat, kann die Positionierung des Bezugsstreifens entlang der Wandung des Rahmens der Gießform leicht bewerkstelligt werden. Hierbei ist zu berücksichtigen, daß das Formteil von seiner Herstellung her bereits einen der Sohlen- und Absatzkontur entsprechenden Umriß besitzt, an den sich der Bezugsstreifen anpaßt. Zweckmäßig ist das Formteil in Richtung auf das Zentrum der Gießform nachgiebig und elastisch verformbar ausgebildet, so daß sich etwaige Toleranzen zwischen dem Umriß des Formteils und der Seitenwandung der Gießform leicht überbrücken lassen. Jedenfalls ist die Ausbildung des den Bezugsstreifen abstützenden Formteils so getroffen, daß der Bezugsstreifen durch das Formteil fest gegen die Wandung der Gießform angedrückt wird.

Eine andere Ausführung des mit einem Formteil zur Abstützung des Bezugsstreifens arbeitenden Erfindungsgedankens besteht darin, daß der Bezugsstreifen an dem gleichermaßen als Gerüst für diesen wirkenden Formteil angeformt ist, gegebenenfalls einschließlich des Dichtungswulstes, so daß das Gerüst, der Bezugsstreifen und auch der Dichtungswulst aus einem Stück bestehen können. Ein solches Formstück kann als Kunststoffspritzteil aus einem komprimierbaren Material, z.B. Kunststoffschaum, ausgebildet sein. Dies bringt den Vorteil mit sich, daß sich die Kontur des Sohlenrandes, einschließlich der Absatzpartie, in vielfältigerer Weise gestalten läßt, als wenn der Bezugsstreifen aus einem gesonderten Teil, z.B. aus Kunststoff, Leder oder Textilmaterial besteht. Dieser Vorteil läßt sich natürlich auch mit der vorstehend beschriebenen Ausführungsform erreichen, bei der das Formteil an die Rückseite des Bezugsstreifens angegossen ist.

Das erfindungsgemäß zur Bildung des Bezugsstreifens und zu dessen Abstützung verwendete Formteil ist vorteilhafterweise wieder wannenförmig gestaltet. Dabei bildet dann die (hochstehende) Wandung der Wanne den eigentlichen Bezugsstreifen, an dessen oberen Rand der Dichtungswulst entweder mit angeformt oder als gesondertes Teil aufgesetzt sein kann. Der Umriß der Wanne entspricht wieder der Sohlen- und Absatzkontur, damit eine feste Anlage des Bezugsstreifens an der Seitenwandung des Gießraums sichergestellt ist, wobei auch in diesem Falle eine gewisse Nachgiebigkeit für die Überbrückung von Toleranzen zwischen dem Umriß des

- 10 -

Formstücks und der Formenwandung nützlich ist.

Je nach den geschmacklichen Erfordernissen kann die Außenseite des Bezugsstreifens bzw. der Wannenwandung und auch der Dichtungswulst mit einer Kaschierung z.B. aus Leder oder Textilmaterial versehen sein, so daß das Formstück von außen nicht sichtbar ist.

Eine von den Herstellungskosten für den Schuh her sehr vorteilhafte Ausführungsform des erfindungsgemäßen Verfahrens besteht darin, daß an dem Formteil nicht nur der Bezugsstreifen, sondern auch der (keilförmige) Absatzkern sowie eine gegebenenfalls noch vorgesehene Zwischensohle ausgebildet ist. Dadurch ergibt sich nicht nur eine günstige Kostenbasis für die Fertigung der Schuhbodenteile, sondern auch eine besonders rationelle Beschickung der Gießform, weil nur ein einziges Stück in den Gießraum eingelegt zu werden braucht. Der letztgenannte Vorteil bleibt auch dann erhalten, wenn der Absatzkern und die Zwischensohle aus einem anderen Material, z.B. Kork oder Filz, bestehen als das Formteil und mit diesem nicht einstückig ausgebildet sind. Die Einzelstücke für diese Schuhbodenteile können aber bereits außerhalb der Gießform mit dem erfindungsgemäß verwendeten Formteil z.B. durch Verklebung verbunden und somit beim Einlegen in die Form als ein einziges Teil gehandhabt werden.

Wenn im Zusammenhang mit der Erfindung von einem an das Schuhoberteil angegossenen bzw. angespritzten Sohlenkörper die Rede ist, dann soll hiermit sowohl der Fall einer angegossenen Laufsohle als auch der einer angegossenen Zwischensohle erfaßt werden, wobei im letzteren Fall unterhalb der Zwischensohle noch eine Laufsohlenschicht vorgesehen sein kann, die selbstverständlich auch im Gießverfahren - in einer sich an das Angießen der Zwischensohle anschließenden weiteren Arbeitsstufe - sich herstellen läßt.

Auf der Oberseite des gegossenen Sohlenkörpers kann in an sich bekannter Weise ein Fußbett ausgebildet sein, so daß die Erfindung auch bei nach orthopädischen Gesichtspunkten gestalteten Sandaletten anwendbar ist.

Die Erfindung wird nachfolgend unter Bezugnahme auf die in der Zeichnung dargestellten Ausführungsbeispiele erläutert.

In der Zeichnung stellen dar:

Figur 1 im Längsschnitt eine für die Durchführung des erfindungsgemäßen Verfahrens verwendbare Form mit auf dem Formenleisten aufgezogenen Schuhoberteil, wobei zwecks Darstellung der für die Ausbildung der Vorder- und Fersenpartie dienenden Werkzeugbereiche etwa in Originalgröße der Gelenkbereich herausgebrochen wurde, und die Stellung des den Formenraum nach unten abschließenden Bodenstempels des Spritzwerkzeuges in verschiedenen Positionen gezeigt ist (vgl. linke und rechte Hälfte der Abbildung),

Figur 2 einen Schnitt durch die Anordnung nach Fig. 1 im Bereich der Fersenpartie senkrecht
zur Längsachse des Spritzwerkzeuges, wiederum
mit zwei unterschiedlichen Positionen des Bodenstempels und einer Abänderung der formgebenden Innenflächen des Werkzeuges im Vergleich
zur Fig. 1 im Bereich des unteren Randes des
Bezugsstreifens,

Figuren 3 bis 8   verschiedene Ausführungen
für die Ausbildung des Dichtungswulstes am oberen Rand des Bezugsstreifens,

Figur 9   eine der Fig. 1 entsprechende Darstellung, welche die Verwendung eines den Bezugsstreifen vor dem Einbringen der Gießmasse
in der Gießform abstützenden Formteils veranschaulicht,

Figur 10   eine der linken Hälfte der Fig. 9
entsprechende Darstellung, wobei der Bodenstempel des Spritzwerkzeuges in seiner Endstellung gezeigt ist; der Bezugsstreifen, einschließlich des Dichtungswulstes, ist in diesem Falle an dem erfindungsgemäß verwendbaren
Formteil selbst ausgebildet,

Figuren 11 bis 15   verschiedene im Vertikalschnitt dargestellte Ausführungen des erfindungsgemäß verwendbaren Formteils mit an diesem angeformten Bezugsstreifen, wobei dieser,
mit Ausnahme der Ausführung gemäß Fig. 13,
aussenseitig mit einer Kaschierung versehen
ist,

- 13 -

Figur 16    einen vertikalen Teilschnitt durch
ein Spritzwerkzeug zur Herstellung des bei der
Darstellung gemäß Fig. 9 verwendeten Formteils,

Figur 17    eine Ansicht von einem erfindungsgemäß verwendbaren Formteil, an welchem ausser dem
Bezugsstreifen auch noch eine Zwischensohle und
ein (keilförmiger) Absatzkern ausgebildet ist,
wobei zur zeichnerischen Verdeutlichung des Aufbaues ein Bereich des Formteils herausgebrochen
ist.

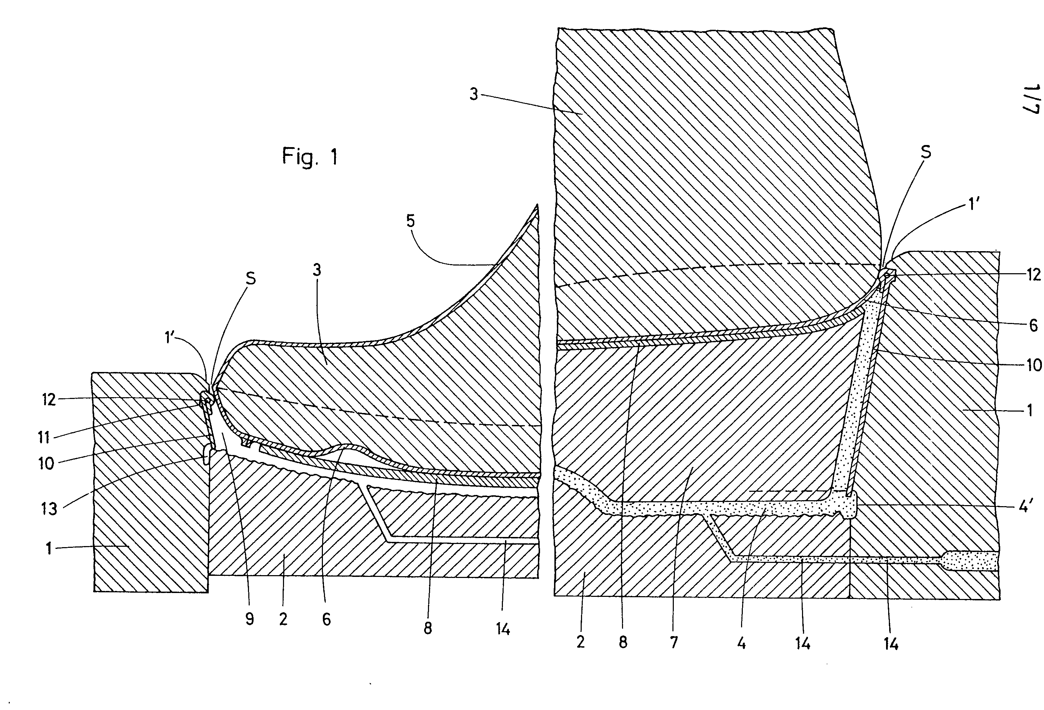

Das in den Fig. 1, 2, 9 und 10 gezeigte Spritzwerkzeug ist von der Herstellung von Schuhwerk mit an das
Schuhoberteil angegossenem Sohlenkörper grundsätzlich
bekannt und braucht deshalb nicht in allen Einzelheiten
beschrieben zu werden. Es besteht aus dem im allgemeinen längsgeteilten, also zweiteiligen Rahmen 1, dem höhenverstellbaren Bodenstempel 2 und dem (Metall)leisten
3. Für das Angießen bzw. Anspritzen des Sohlenkörpers 4,
der aus porigem Kunststoff- oder Kautschukmaterial geformt werden kann, an das aus dem Schaft 5 und der mit
diesem z.B. durch Kleben verbundenen, oder aber vernähten (Einnäh)Brandsohle 6 gebildeten Schuhoberteil,
wird dieses auf den Leisten 3 aufgezogen. Bei einer beispielweisen Ausführung einer Sandalette nach Fig. 1 ist
nur in der Vorderpartie Schaftmaterial vorhanden, während die Fersenpartie schaftfrei ist (vgl. Fig. 1,
linke und rechte Hälfte).

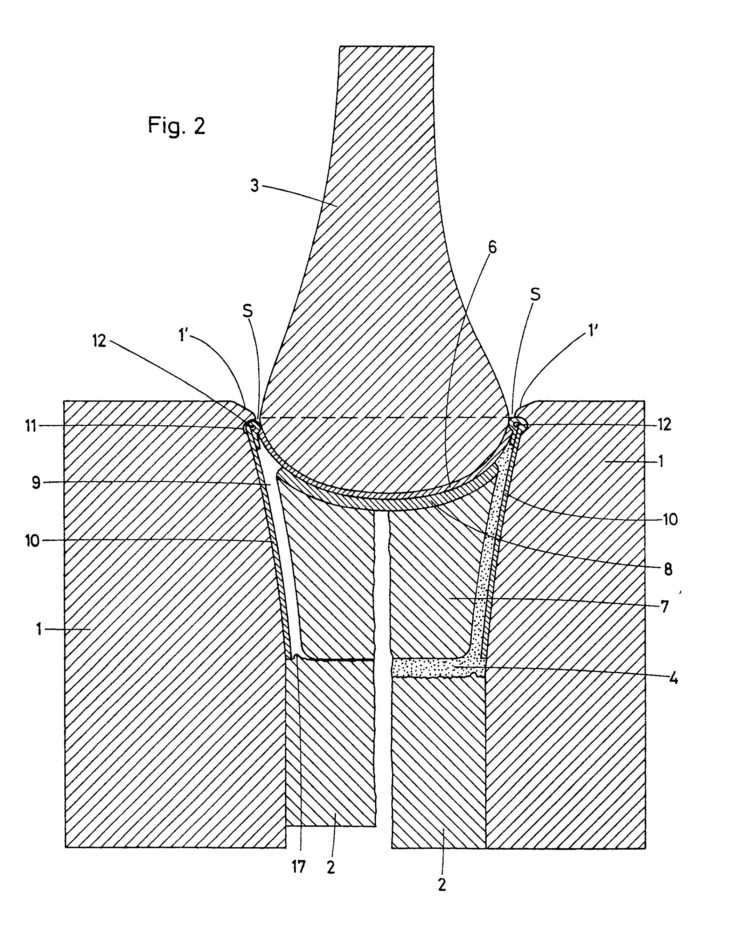

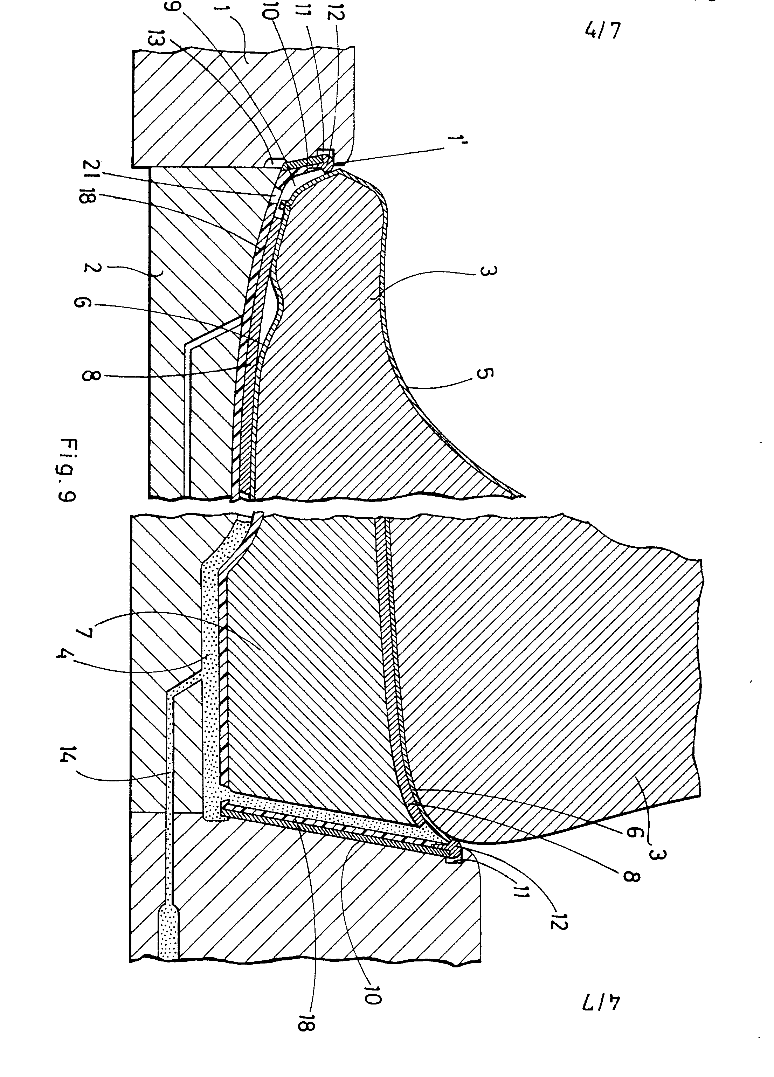

Vor dem Verschließen der Form vermittels des aufgeleisteten Schuhoberteils wird der Bezugsstreifen 10 in den Gießraum der Spritzform eingelegt, wobei sich der Bodenstempel 2 in seiner oberen Stellung befindet (vgl. Figuren 1 und 9, linke Hälfte). Für die Positionierung des Streifens kann unmittelbar unterhalb der Rahmennase 1' eine umlaufende Hinterfräsung 11 in der Rahmeninnenfläche ausgebildet sein, in welche der obere Rand des Bezugsstreifens beim späteren Verschließen der Form vermittels des aufgeleisteten Schuhoberteils soweit eindrückbar ist, daß der Bezugsstreifen in der für das spätere Anspritzen des Sohlenkörpers 4 richtigen Lage fixiert ist. Als weiteres Hilfsmittel für die Positionierung des Bezugsstreifens in der Form kann eine auf der Oberseite des Bodenstempels 2 in dessen Randnähe ausgebildete Erhebung 17 dienen (vgl. Fig. 2). In der linken Hälfte von Fig. 2 ist gezeigt wie der untere Rand des Bezugsstreifens 10 zwischen dieser Erhebung und der Wandungsfläche des Formenrahmens festlegbar ist.

Bevor der Leisten 3 mit dem aufgezogenen Schuhoberteil in die von dem Rahmen 1 umschlossene oberseitige Öffnung der Form eingesetzt und damit in Betriebsstellung gebracht wird, werden zwecks Gewichtseinsparung und schneller Erkaltung der den Sohlenkörper bildenden Gießmasse ein Füllteil-Keilabsatz 7 und eine Füllteil-Zwischensohle 8 in den Formenhohlraum 9 eingelegt. Die spätere Festlegung dieser Teile innerhalb des Formenhohlraumes bei geschlossener Form vor dem Einbringen der den Sohlenkörper 4 bildenden Gießmasse ist aus Fig. 2 linke Hälfte erkennbar, wobei die Zwischensohle 8 zwischen dem Absatzkeil 7 und der Brandsohle 6 eingeklemmt ist.

In der Betriebsstellung der Form (Fig. 1, 2, 9 und 10) kragt der am oberen Rand des Bezugsstreifens 10 ausgebildete Dichtungswulst über den Streifen in Richtung auf den Schaft 5 bzw. den Leisten 3 aus und steht auch gegenüber der Rahmennase 1' vor.

Bei der in den Fig. 1 und 9 gezeigten Ausführungsformen ist in der Nähe des unteren Randes des Bezugsstreifens 10 eine weitere Hinterfräsung 13 in der Rahmeninnenfläche ausgebildet, und zwar in solcher Weise, daß im Zuge des späteren Angießens des Sohlenkörpers 4 die Gießmasse den unteren Rand des Bezugsstreifens umfließen kann und sich dabei ein gegenüber der Aussenseite des Bezugsstreifens vorstehender Sohlenrand 4' ausformt.

Bei dem Ausführungsbeispiel nach Fig. 2 ist eine solche Hinterfräsung im Bereich des unteren Randes des Bezugsstreifens 10 nicht vorgesehen, so daß in dem Fall, daß der Bodenstempel in der Ausgangsstellung verbleibt (vgl. Fig. 2, linke Hälfte), der untere Streifenrand des Bezuges an der Bildung der Lauffläche teilnimmt. Wird der Bodenstempel im Verlaufe des Einspritzvorganges jedoch abgesenkt (vgl. Fig. 2, rechte Hälfte), ergibt sich zwischen der Aussenseite des Bezugsstreifens und dem sichtbaren Aussenrand des Sohlenkörpers 4 ein stufenloser Übergang (vgl. Fig. 2, rechte Hälfte).

Nach dem Einbringen des Bezugsstreifens 10 und der Füllteile 7 und 8 in die Form wird diese von oben her mit dem aufgeleisteten Schaft verschlossen. Dabei drückt sich der Schaft (Fig.1 und 9, linke Hälfte) bzw. der Leisten 3 (Fig. 1 und 9, rechte Hälfte), gegen den Dichtungswulst 12 fest an. Da der Schaft auf dem Leisten aufträgt und somit der Spalt S zwischen dem Leisten und Rahmen verengt wird, findet im Schaftbereich eine stärkere Kompression des Wulstes statt als in der schaftfreien Fersenpartie. Wegen der elastischen Ausbildung des Wulstes wird durch dessen Zusammendrücken - und zwar sowohl im Schaftbereich als auch in der schaftfreien Partie - eine solche Spannung in dem Wulst aufgebaut, daß sich eine dichtende Anlage des Wulstes an dem Schaft bzw. Leisten ergibt und es weiterer Mittel zur Abdichtung des Formenraums nach oben nicht bedarf. Dies wird auch durch den nach Schließen der Form verbleibenden Spalt S zwischen der Dichtungsnase 1' und dem aufgeleisteten Schuhoberteil verdeutlicht.

Nach unten ist der Hohlraum der Form 9 durch den höhenverstellbaren Bodenstempel 2 verschlossen, in welchem die Kanäle 14 untergebracht sind, über welche die Gießmasse in an sich bekannter Weise in den Hohlraum 9 eingedrückt werden kann. Im Zuge der Füllung des Formenraums 9 kann der Stempel 2 durch eine entsprechende Steuerung in an sich bekannter Weise in seiner Höhe verstellt werden. Hierfür sind auch die in den Fig. 1, 2 und 9 dargestellten Ausführungsbeispiele eingerichtet, wie ein Vergleich der jeweils linken Hälften mit den rechten Hälften deutlich macht. Fig. 2 zeigt aber auch, daß der Bodenstempel während des Einspritzvorganges in seiner Ausgangsstellung (vgl. linke Hälfte der Fig. 2) verbleiben kann und nicht unbedingt abgesenkt zu werden braucht (vgl. rechte Hälfte der Fig. 2). Je nachdem, ob die Position des Bodenstempels verändert wird, ist die Ausbildung des unteren Aussenrandes der Sohle verschieden, was durch den Vergleich der linken und rechten
Hälfte der Darstellung in Fig. 2 verdeutlicht
wird.

Nach dem Erkalten und der Verfestigung des Sohlenkörpers 4 wird die Form durch Trennung der Teile des Rahmens 1 und Hochfahren des Leistens 3 geöffnet,wonach die fertige Sandalette von dem Leisten 3 abgezogen werden kann. Eine Nacharbeit ist
nicht erforderlich.

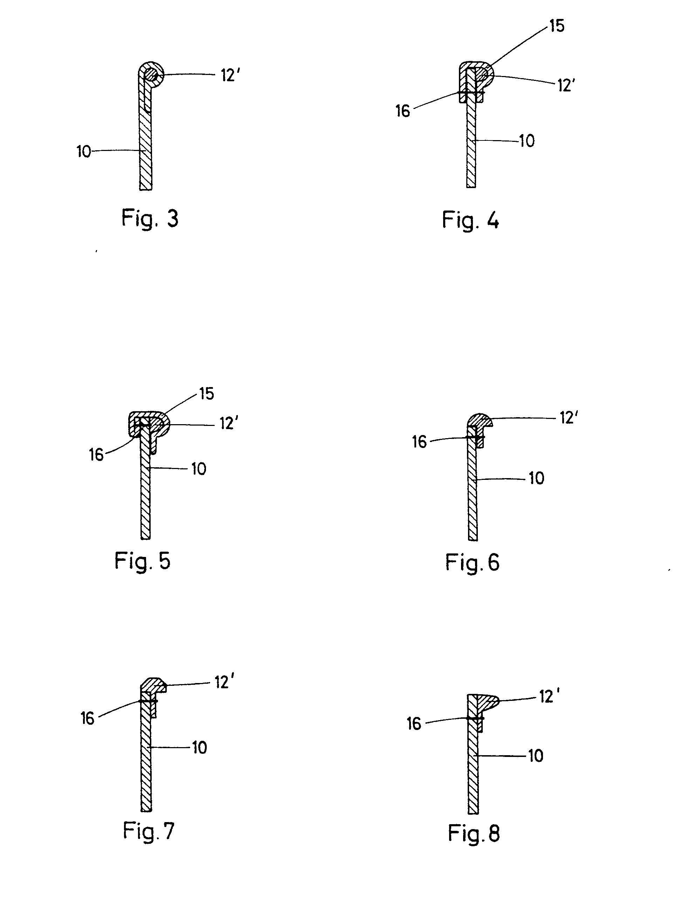

Die Fig. 3 bis 8 zeigen verschiedene Ausführungsformen des erfindungsgemäß verwendeten Bezugsstreifens. Bei der Ausführung nach Fig.3 ist zur Bildung
des Dichtungswulstes der obere Rand des Bezugsstreifens unter Einschluß eines nachgiebig-elastischen
Stranges (Formkörpers) 12' umgelegt.

Die Ausführungsform nach Fig. 4 kommt dadurch zustande, daß zur Bildung des Dichtungswulstes der obere
Rand des Bezugsstreifens unter Einschluß eines nachgiebig-elastischen Stranges (Formkörpers) mit in etwa halbkreisförmigem Querschnitt von einem Einfassstreifen 15 umschlossen ist. Die Befestigung des Einfasses 15 an dem Streifen 10 erfolgt vermittels einer
Naht 16.

Die Ausführungsform gemäß Fig. 5 ist im Prinzip ebenso aufgebaut wie die nach Fig. 4, wobei lediglich der
Einfass 15 paspolartig gestaltet ist (verdeckte Naht).

Im Unterschied zu den vorstehend beschriebenen Ausführungen für den Bezugsstreifen ist bei der Ausführungsform gemäß Fig. 6 der den Dichtungswulst bildende nachgiebig-elastische Strang 12' sichtbar. Er besitzt ein pilzförmiges Querschnittsprofil und ist vermittels des Fußsteges über die Naht 16 an dem Bezugsstreifen 10 befestigt.

Die Ausführungsform gemäß Fig. 7 ist im Prinzip ebenso aufgebaut wie die nach Fig. 6. Das Strangprofil ist jedoch markanter (eckiger) gestaltet.

Auch bei der Ausführung nach Fig. 8 bleibt der Dichtungswulst sichtbar. Das P-förmige Querschnittsprofil läßt jedoch die obere Randfläche des Bezugsstreifens unbedeckt, so daß diese am fertigen Schuh sichtbar ist.

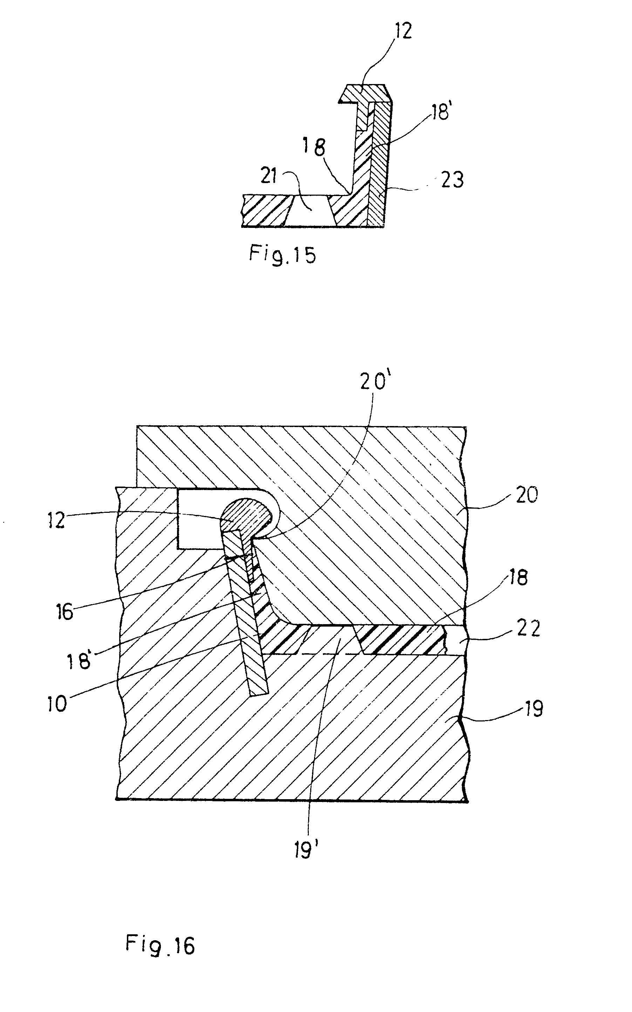

Bei dem in Fig. 9 dargestellten Ausführungsbeispiel wird vor dem Verschließen der Form vermittels des aufgeleisteten Schuhoberteils ein mit dem Bezugsstreifen 10 verbundenes Formteil 18 in den Gießraum der Spritzform eingelegt, wobei sich der Bodenstempel in seiner oberen Stellung befindet (vgl. Fig. 9 linke Hälfte). Die bei diesem Ausführungsbeispiel aus Bezugsstreifen und Formteil bestehende Einheit wird in einem gesonderten Arbeitsgang hergestellt. Dies ist in Fig. 16 verdeutlicht. Hierbei wird der mit dem Dichtungswulst 12 verbundene Bezugsstreifen in dem Bodenteil 19 einer Spritzform in solcher Weise angeordnet, daß das untere Ende des Bezugsstreifens in eine in dem Bodenteil ausgearbeitete Nut zu liegen kommt. Dadurch wird die Positionierung des Bezugsstreifens in der Form erleichtert. Unterhalb des oberen Randes des Bodenteils 19 springt dessen Innenwandung zurück, so daß beim Verschließen der Form vermittels des Oberteils 20 und auch beim späteren Öffnen der Form der Dichtungswulst nach aussen ausweichen kann. Im Bereich des Dichtungswulstes ist das Oberteil 20 so ausgearbeitet, daß es mit einer den Wulst untergreifender Kante 20' dichtend an dem an dem Wulst ausgebildeten Steg zur Anlage kommt, vermittels dessen der Wulst über eine Naht 16 mit dem Bezugsstreifen verbunden ist.

In den nach dem Verschließen der Form verbliebenen Gießraum 22 wird die Gießmasse (z.B. ein aufschäumbarer Kunststoff) für die Bildung des wannenförmigen Formteils 18 eingebracht. Dabei werden vermittels auf der Oberseite des Bodenteils der Form vorhandener Vorsprünge 19' im Wannenboden Durchbrechungen 21 ausgespart (vgl. auch Fig. 11 bis 15), durch welche später die den Sohlenkörper 4 bildende Gießmasse hindurchfließen kann. Während des Gießens des wannenförmigen Formteils verbindet sich dessen hochstehender Rand 18' mit der Innenseite des Bezugsstreifens 10.

Nach der Entnahme der aus Bezugsstreifen und Formteil bestehenden Einheit aus der Form wird das gegenüber dem Wannenboden vorstehende untere Ende des Bezugsstreifens abgeschnitten, so daß diese Einheit dann für die Herstellung des Schuhbodens nach dem erfindungsgemäßen Verfahren weiter verwendet werden kann.

Wie die linke Hälfte der Fig. 9 erkennen läßt, ergeben sich für die Positionierung des Bezugsstreifens 10 in dem Gießraum 9 der Form keine Probleme, nachdem das Formteil 18 gleichermaßen als den Bezugsstreifen 10 abstützendes Gerüst wirkt.

Da im Boden des wannenförmigen Formteils 18 die Durchbrechungen 21 ausgebildet sind, kann die Gießmasse auch über den oberhalb des Wannenbodens liegenden freien Raum hineinfließen, so daß sich die Innenseite des hochstehenden Wannenrandes mit der Gießmasse und auch die Umfangsflächen der Zwischensohle 8 und des Absatzkerns 7 mit der Gießmasse verbinden können.

In den Fig. 11 bis 15 und 17 ist eine gegenüber der zuletzt beschriebenen Ausführungsform insofern grundsätzlich verschiedene Verwirklichung des Erfindungsgedankens gezeigt, als hierbei der hochstehende Rand 18' des gleichfalls wannenförmig ausgebildeten Formteils 18 selbst als Bezugsstreifen ausgebildet ist, wobei in den Fällen der Fig. 11 bis 14 und 17 an dem oberen Rand des Bezugsstreifens der Dichtungswulst gleich mit angeformt ist. Bei dem Ausführungsbeispiel der Figur 15 stellt der Dichtungswulst hingegen ein gesondertes Teil dar, das mit dem Bezugsstreifen, also der Wannenwandung, in geeigneter Weise, beispielsweise durch Verklebung, verbunden ist.

Nach den Ausführungsbeispielen gemäß den Fig. 11, 12, 14 und 15 ist der durch das wannenförmige Formteil 18 gebildete Bezugsstreifen 18' aussenseitig mit einer Kaschierung 23 versehen, die aus Kunststoff, Leder oder Textilmaterial bestehen und beispielsweise durch Verklebung mit der Wannenwandung verbunden sein kann.

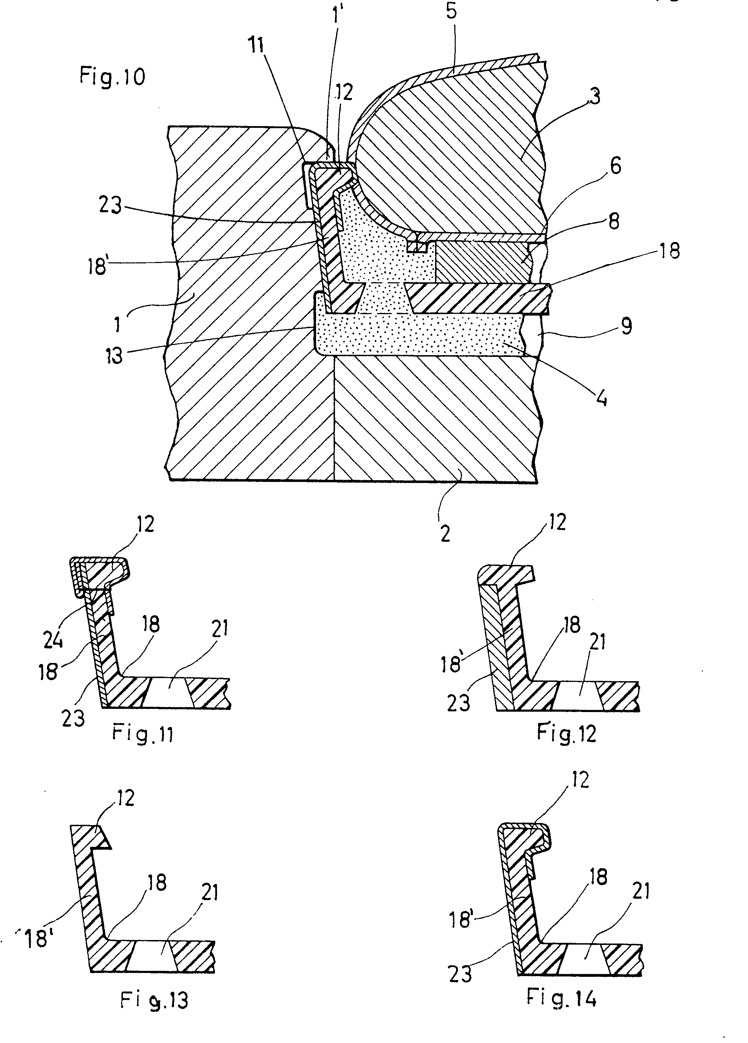

Bei den Ausführungen nach den Figuren 11 und 14 ist der Dichtungswulst 12 in die Kaschierung mit einbezogen, wobei diese im Falle der Fig. 3 aus zwei durch eine Naht 24 miteinander verbundenen Teilen gebildet ist.

In den Fällen der Fig. 12 und 15 wird der obere Rand der Kaschierung durch eine nach aussen weisende Anformung des Dichtungswulstes abgedeckt.

Die Fig. 10 veranschaulicht die Verwendung des in Fig. 14 gezeigten Formteils mit aussenseitiger Kaschierung. Sie macht ebenso wie die rechte Hälfte der Fig. 9 deutlich, wie vermittels einer in der Rahmeninnenfläche ausgebildeten Hinterfräsung 13 der untere Rand des mit dem Formteil verbundenen (Fig. 9) bzw. an diesem ausgebildeten (Fig. 10) Bezugsstreifens von der Gießmasse für den Sohlenkörper umflossen und somit in diesem fest verankert wird.

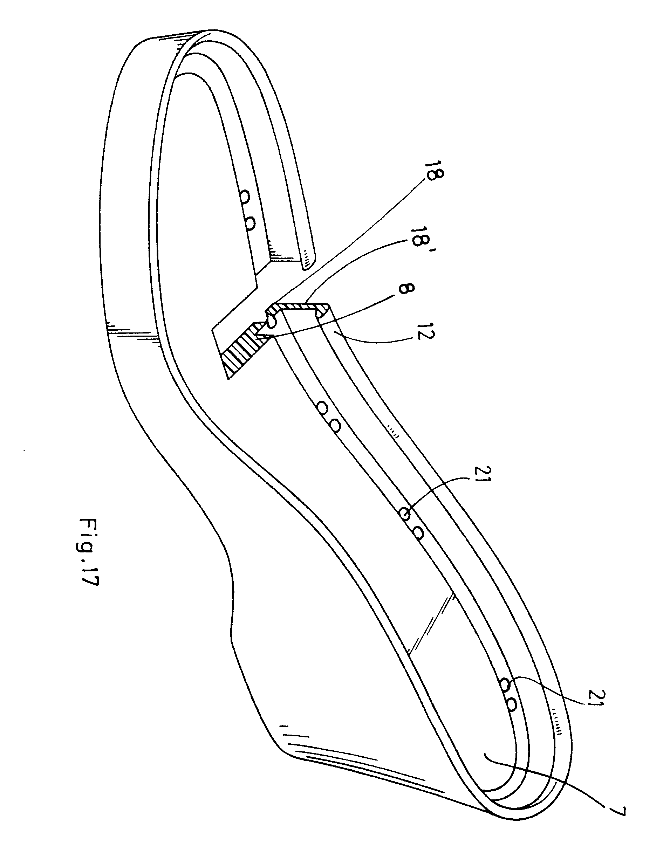

Die Fig. 17 veranschaulicht ein Ausführungsbeispiel der Erfindung, bei dem nur ein einziges Teil in den Gießraum 9 eingelegt zu werden braucht, weil das Formteil 18 mit dem Bezugsstreifen 18' (einschl. des Dichtungswulstes 12) und die Zwischensohle 8 sowie der Absatzkern 7 eine Einheit bilden.

- 1 -

Patentansprüche

1. Verfahren zur Herstellung eines Schuhes mit
einem Sohlenkörper, dessen Umfangsfläche von
einem Bezugsstreifen abgedeckt ist, wobei
der Sohlenkörper sowohl an das Schuhoberteil
als auch an den Bezugsstreifen angegossen ist
und der obere Rand des Bezugsstreifens oberhalb des oberen Randes der Umfangsfläche des
Sohlenkörpers verläuft,
dadurch gekennzeichnet,
daß in eine für das Angiessen des Sohlenkörpers (4) verwendete Gießform (1,2) ein an seinem oberen Rand mit einem nach innen auskragenden und in der entgegengesetzten Richtung
nachgiebigen, elastisch verformbaren Dichtungswulst (12) versehener Bezugsstreifen (10)
auf der seitlichen Innenfläche der Form angeordnet und hiernach die oberseitige Öffnung
der Form vermittels des auf einen Leisten (3)
aufgezogenen Schuhoberteils (5) in solcher Weise
verschlossen wird, daß der Schaft des Schuhoberteils und die gegebenenfalls vom Schaft unbe-

- 2 -

deckt gebliebene Leistenfläche bzw. -flächen
gegen den Dichtungswulst des Bezugsstreifens
dichtend angepreßt werden und daß anschließend
der Sohlenkörper angegossen wird.

2. Verfahren nach Anspruch 1,
dadurch gekennzeichnet,
daß der Bezugsstreifen (10) so zu dem aufgeleisteten Schuhoberteil (5) in der Gießform
angeordnet wird, daß das Schuhoberteil und die
gegebenenfalls vom Schaft unbedeckt gebliebene Leistenfläche bzw. -flächen oberhalb des
Brandsohlenrandes (6) gegen den Dichtungswulst (12) angepreßt werden.

3. Verfahren nach einem der vorhergehenden Ansprüche,
dadurch gekennzeichnet,
daß in der Gießform (1,2) ein den Bezugsstreifen (10) vor dem Einbringen der Gießmasse nach
innen abstützendes, vorzugsweise aus Kunststoff
bestehendes Formteil (18) angeordnet wird (Fig.
9-17).

4. Verfahren nach Anspruch 3,
gekennzeichnet
durch die Verwendung eines Formteils (18), das
vor der Anordnung in der Gießform (1,2) an die
Innenseite des Bezugsstreifens (10) angegossen
wurde (Fig. 9 und 16).

5. Verfahren nach Anspruch 4,
   gekennzeichnet
   durch die Verwendung eines wannenförmig ausgebildeten Formteils (18), wobei der obere
   Rand der Wannenwandung von dem Dichtungswulst
   (12) abgedeckt wird.

6. Verfahren nach Anspruch 3,
   gekennzeichnet
   durch die Verwendung eines Formteils (18),
   an welchem der Bezugsstreifen einschließlich
   des Dichtungswulstes (12) angeformt ist (Fig.
   11-15 u. 17).

7. Verfahren nach Anspruch 6,
   gekennzeichnet
   durch die Verwendung eines wannenförmig ausgebildeten Formteils (18), dessen Wandung (18')
   den Bezugsstreifen bildet (Fig. 11-15 u. 17).

8. Verfahren nach Anspruch 6 oder 7,
   gekennzeichnet
   durch die Verwendung eines Formteils (18), dessen angeformter Bezugsstreifen aussenseitig mit
   einer Kaschierung (23) versehen ist (Fig. 10-15).

9. Verfahren nach einem der vorhergehenden Ansprüche 3 - 8,
   gekennzeichnet
   durch die Verwendung eines Formteils (18), das
   in Richtung auf das Zentrum der Gießform (1,2)
   nachgiebig und elastisch verformbar ausgebildet
   ist.

10. Verfahren nach einem der vorhergehenden Ansprüche 3 - 9,
gekennzeichnet
durch die Verwendung eines Formteils (18),
an welchem auch der Absatzkern ausgebildet
ist (Fig. 17).

11. Verfahren nach Anspruch 5 oder 7,
gekennzeichnet
durch die Verwendung eines mit Durchbrechungen (21) für den Durchfluß der Sohlenkörper-
Gießmasse versehenen Formteils.

12. Vorrichtung zur Durchführung des Verfahrens
nach einem der vorhergehenden Ansprüche,
dadurch gekennzeichnet,
daß auf der Innenfläche des den Hohlraum (9)
zur Aufnahme der Gießmasse umschließenden
Rahmens (1) der Gießform eine Hinterfräsung
(11) ausgebildet ist, in welche der obere
Rand des Bezugsstreifens (10) eindrückbar ist.

Fig. 1

Fig. 2

Fig. 3

Fig. 4

Fig. 5

Fig. 6

Fig. 7

Fig. 8

Fig. 9

Fig.10

Fig.11

Fig.12

Fi g.13

Fi g.14

12

18'

18

21                                23

Fig.15

20'

12                                                    20

16

18

18'                                                   22

10

19

19'

Fig.16

Fig.17

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | GB - A - 1 030 402 (C.I.C. ENGINEERING)<br><br>* Seite 3, Zeilen 73-94; Figuren 9,10 *<br><br>-- | 1,2 | B 29 F 1/10 |
| A | DE - B - 1 052 861 (HERBERT LUDWIG)<br><br>* das ganze Dokument *<br><br>-- | 1 | |
| A | DE - B - 1 270 793 (I. & C.A. SCHNEIDER)<br><br>* das ganze Dokument *<br><br>-- | 1 | RECHERCHIERTE SACHGEBIETE (Int. Cl.³)<br><br>B 29 F<br>B 29 H<br>A 43 B |
| A | DE - A - 2 121 460 (RO-SEARCH)<br><br>* das ganze Dokument *<br><br>------ | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-03-1981 | BOLLEN |

EPA form 1503.1 06.78